# EUROPEAN PATENT APPLICATION

(11) **EP 1 337 019 A1**
(43) Date of publication of application: **20.08.2003**
(21) Application number: 03002724.7
(22) Date of filing: 06.02.2003
(51) Int. Cl.: H02G 3/06, H02G 3/04

(54) **A connecting clamp, particularly for mesh cable trays with low sides**

(30) Priority: 18.02.2002 IT TO20020136
(71) Applicant: Legrand S.p.A., 20080 Zibido San Giacomo (Milano) (IT)
(72) Inventor: Finco, Alan, 15047 Spinetta Marengo (Alessandria) (IT); Garassino, Luca, 15067 Novi Ligure (Alessandria) (IT)
(74) Representative: Deambrogi, Edgardo

(57) **Abstract**

A connecting clamp (10) for connecting a pair of end transverse wires (5) of two consecutive mesh cable tray sections (1, 2), comprises a first element and a second element (11, 12) intended to be mounted inside and outside the mesh tray, respectively, so as to clamp the base parts (6) of the two transverse wires (5) to be connected. The inner element (11) comprises a first portion (13) for being coupled with the outer element (12) to clamp the base parts (6) of the end transverse wires (5) of the two tray sections (1, 2) and a second portion (14) which is perpendicular to the first portion (13) and forms a pair of seats (14b, 18) for restraining the vertical parts (7) of the wires (5).

## Description

The present invention relates to a connecting clamp for mesh cable trays as specified in the preamble to Claim 1.

It is common practice, particularly in the electrical field, to use mesh cable trays constituted by a plurality of longitudinal and transverse wires, connected to one another to form a grid, wherein each transverse wire includes a horizontal base part from which two parallel vertical parts extend perpendicularly, so that each transverse wire is generally U-shaped. These trays are produced in portions or sections of predetermined length which are connected to one another longitudinally by means of connecting clamps to form a continuous way.

The longitudinally opposite ends of each tray section are defined each by a respective transverse wire, hereinafter referred to by the term "end transverse wire" or "first transverse wire". In order to connect two separate adjacent mesh tray sections, the sections are moved longitudinally towards one another until their respective end transverse wires are disposed side by side and can therefore be coupled together with the use of connecting clamps which are generally mounted on the two vertical parts and on the base part of the two wires to be connected.

As is known, for example, from German patent application DE-20 36 325 and from Austrian patent AT-329 133, the normal connecting clamps for connecting two separate adjacent sections of a mesh cable tray comprise a pair of shaped plate-like elements or plates, of which at least one forms a pair of seats for housing the two transverse wires to be connected and for restraining them in the longitudinal plane, and the other provides an abutment surface for locking transversely the two wires in these seats. The two elements are arranged facing one another on opposite sides of the two wires so as to enclose the wires like a "sandwich" and are then connected to one another by threaded fixing members, typically a bolt with a respective nut, the bolt being inserted in a pair of aligned through-holes provided in base portions of the two plate-like elements.

As mentioned above, conventionally, the connecting clamps are mounted both on the sides and on the base of the mesh cable tray in order to provide both translational and rotational restraint for the two tray sections to be connected. However, for mesh trays with low sides, that is, trays in which the transverse wires have parallel vertical parts of reduced height, typically connected to one another by a single longitudinal wire at the upper end, it is not possible to mount a connecting clamp according to the prior art discussed above on the sides of the tray, since the external space occupied by the bolt and/or the clamping nut of the clamp would obstruct the snap-fitting of the removable cover for closing the upper access opening of the tray. In order to connect two mesh tray sections with low sides with a conventional clamp, the clamps can thus be mounted solely on the base parts of the transverse wires, with the consequent disadvantage of a connection which is less reliable, for a given number of clamps used, than if the clamps were also mounted on the vertical parts of the transverse wires.

The object of the present invention is therefore to provide a connecting clamp, particularly for connecting sections of mesh cable tray with low sides, which enables to solve the problems of the prior art discussed above.

This object is achieved in full, according to the invention, by means of a connecting clamp having the characteristics defined in the characterizing part of Claim 1.

In summary, the present invention is based on the principle of providing a clamp in which one of the two elements, in particular, that disposed on the inside of the mesh tray, has a right-angled shape with two perpendicular plate-like portions for engaging both the base parts and the vertical parts of the two transverse wires to be connected, whereas the outer element has only one plate-like portion arranged to be coupled with the lower plate-like portion of the inner element in order to clamp solely the base parts of the two transverse wires.

The characteristics and the advantages of the present invention will be described in greater detail in the following detailed description, given purely by way of non-limiting example, with reference to the appended drawings, in which:
Figure 1 is a perspective view of a first preferred embodiment of a connecting clamp according to the invention, shown in the mounted arrangement for connection of two longitudinally adjacent sections of mesh cable tray with low sides,
Figure 2 is an exploded, perspective view of the connecting clamp of Figure 1,
Figure 3 is a perspective view of the inner element of the connecting clamp of Figure 1,
Figure 4 is a perspective view similar to that of Figure 1, showing a second preferred embodiment of a connecting clamp according to the invention, and
Figures 5 and 6 are two perspective views of the inner element of the connecting clamp of Figure 4.

In the description and claims which follow, terms such as "vertical" and "horizontal", "longitudinal" and "transverse", "inner" and "outer" are to be understood as referring to the assembled condition, with the connecting clamp mounted astride the right-angled portions of the end transverse wires of the two tray sections to be connected, to engage both the base part and a vertical part of these wire.

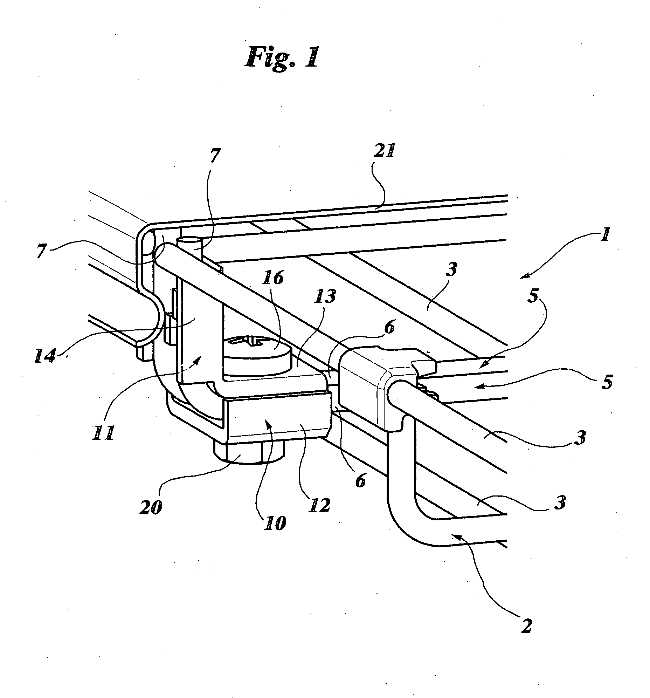

With reference initially to Figure 1, first and second longitudinally adjacent mesh cable tray sections with low sides are generally indicated 1 and 2 and comprise each a series of longitudinal metal wires 3 and a series of transverse metal wires 5 connected to form a grid. Each transverse wire 5 includes a normally straight base part 6 from which a pair of parallel vertical parts 7 extend perpendicularly, so that each transverse wire is generally U-shaped.

In order to connect the two tray sections 1 and 2, a pair of connecting clamps 10 (of which only one is shown in Figure 1) are mounted at the transversely opposite ends of the base parts 6 of the two facing transverse wires 5 of the sections so as to secure both the base parts and the vertical parts 7 thereof, as will be explained further in the following part of the description.

Each clamp 10 comprises a pair of sheet-metal elements 11 and 12 which are arranged inside and outside the wire grid constituting the mesh tray, respectively, and will be referred to hereinafter by the terms "inner element" and "outer element".

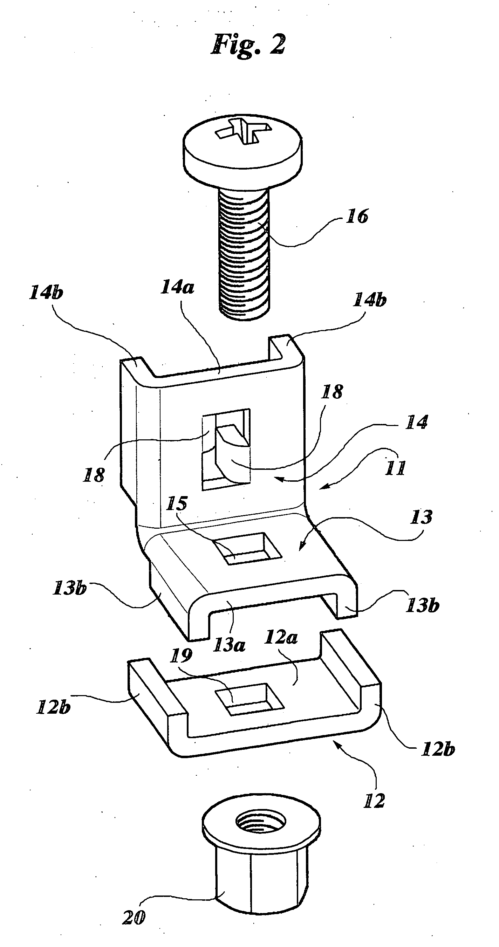

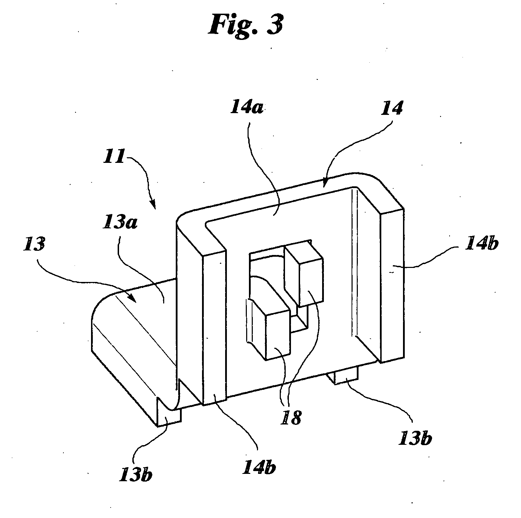

With reference to Figures 2 and 3, the inner element 11 comprises a pair of perpendicular channel-like portions 13 and 14 extending horizontally and vertically, respectively, for housing and restraining longitudinally the base part 6 of each of the two end transverse wires 5 and one of the two vertical parts 7 of the wires 5, respectively.

The horizontal channel-like portion 13 comprises a substantially rectangular base plate 13a from the transverse edges of which a pair of downwardly-facing vertical walls 13b extend perpendicularly, defining with the base plate 13a a channel-shape of dimensions such as to house respective lengths of the base parts 6 of the two transverse wires 5 to be connected. The base plate 13a has, in a longitudinally intermediate position, a through-opening 15 for insertion of a bolt 16 (Figure 2) for clamping the two wires 5 between the portion 13 of the inner element 11 and the outer element 12. When the bolt 16 is inserted through the opening 15, the two transverse wires 5 are thus restrained longitudinally between the shank of the bolt and the vertical walls 13b of the element 11.

The vertical channel-like portion 14 also comprises a substantially rectangular base plate, indicated 14a, from the transverse edges of which a pair of vertical walls 14b extend perpendicularly, facing outwardly relative to the tray and defining, with the base plate 14a, a channel-shape of dimensions such as to house the vertical parts 7 of the two transverse wires 5 to be connected. The base plate 14a further has a pair of vertical tabs 18 which project perpendicularly from the plate and laterally outwardly and cooperate each with the vertical wall 14b adjacent thereto to lock longitudinally the respective vertical part 7 of the wire. As can easily be understood from Figure 3, the tabs 18 are advantageously integral with the base plate 14a from which they are produced by cutting and subsequent bending of a pair of vertically superposed, rectangular portions.

With reference in particular to Figure 2, the outer element 12 comprises a substantially rectangular base plate 12a from the transverse edges of which a pair of upwardly-facing vertical walls 12b extend perpendicularly, defining with the base plate 12a a channel-shape having a width (that is a longitudinal size) such as to house the channel-like portion 13 of the inner element 11.

As in the inner element 11, the base plate 12a of the outer element 12 has a through-opening 19, operatively aligned with the through-opening 15 of the element 11, to permit the insertion of the bolt 16 onto which a nut 20 is screwed from the outside in order to clamp the base parts 6 of the two transverse wires 5 between the base plate 12a of the outer element 12 and the base plate 13a of the inner element 11. Clearly, in order for the two wires 5 to be clamped between the two plates 13a and 12a without vertical clearance, the opposed vertical walls 13b of the inner element 11 must have a height less than the diameter of the wires.

Alternatively, the outer element 12 may consist solely of the base plate 12a, which is connected to the base plate 13a of the inner element 11, for example, by means of screw fasteners in order to clamp the base parts 6 of the two transverse wires 5 like a "sandwich".

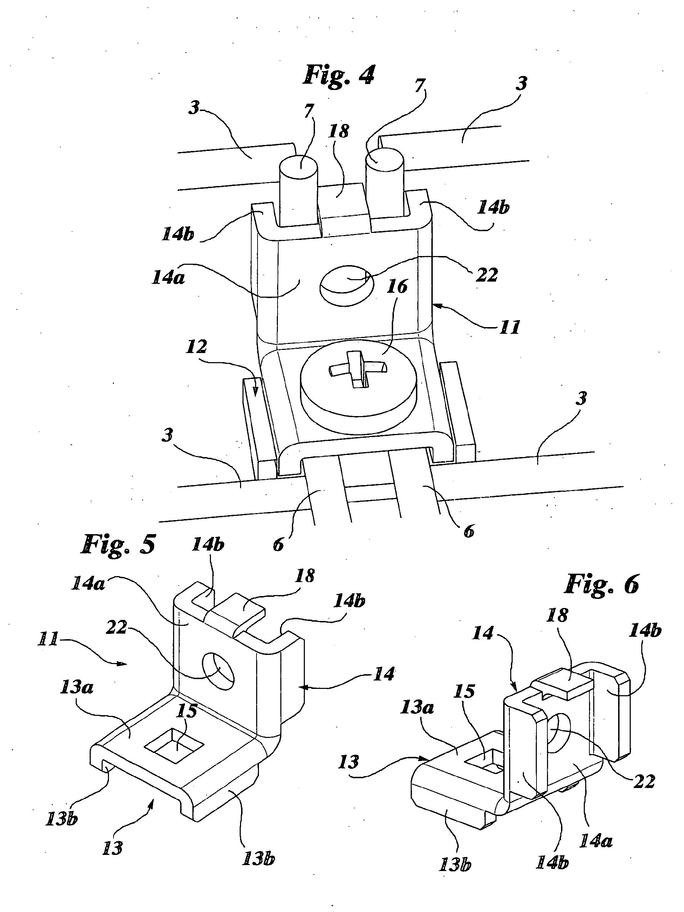

A second preferred embodiment of the invention is shown in Figures 4 to 6, in which parts and elements identical or corresponding to those of the preceding drawings have been attributed the same reference numerals. The sole difference with respect to the constructional embodiment described above is that the vertical tabs 18 are replaced by a single horizontal tab 18 projecting outwardly from the upper edge of the base plate 14a of the vertical channel-like portion 14. In this embodiment also, the tab 18 has the function of longitudinal locking of the vertical parts 7 of the two wires to be connected, by cooperating with the vertical side walls 14b of the portion 14.

Advantageously, a hole 22 is formed in the base plate 14a in order to enable connection to a suspension member such as a threaded pull-rod, if the tray is not mounted in the U-shaped arrangement shown in the drawings, that is, with the base parts 6 laying horizontally, for example, supported on brackets, but is mounted in a C-shaped arrangement with the base parts staying vertically in abutment against a wall.

The sequence for the fitting of the connecting clamp will now be described. After the two end wires 5 of the two mesh tray sections 1 and 2 to be connected have been aligned in a transverse plane, the inner element 11 is arranged astride the two wires 5 in the region of one of their two corner portions, with the vertical parts 7 of the two wires 5 inserted between the tabs 18 and the vertical walls 14b of the channel-like portion 14 and with the base parts 6 of the two wires 5 housed between the vertical walls 13b of the channel-like portion 13. The outer element 12 is then connected to the horizontal portion 13 of the inner element 11, for example, by means of the bolt 16 and the nut 20, so as to clamp the two wires 5 between the respective base plates 13a and 12a.

As can be seen in Figure 1, the space occupied by the connecting clamp outside the sides of the mesh tray is less than that occupied by the longitudinal top wire connected to the upper ends of the vertical parts 7 of the transverse wires 5. It is therefore possible to arrange a normal cover 21 (Figure 1) so as to close the space inside the tray from above, without the connecting clamp 10 interfering with the vertical side walls of the cover.

It is pointed out that the two embodiments described above are given purely by way of non-limiting examples of the present invention. Various other equivalent embodiments are, however, possible. This applies in particular to the way of fixing the two, inner and outer elements 11 and 12, which is achieved by screw fasteners in the embodiment illustrated above, but may also be performed, for example, by a snap mechanism or by a mechanism of any other type.

## Claims

1. A connecting clamp (10) for connecting two consecutive sections (1, 2) of mesh cable tray, each comprising a series of longitudinal wires (3) and a series of transverse wires (5) connected to one another to form a grid, wherein each transverse wire (5) includes a base part (6) from which two parallel parts (7) extend transversely so that each transverse wire (5) is generally U-shaped,
the clamp (10) comprising a first element and a second element (11, 12) adapted to be associated with the mesh tray on the inner side and on the outer side, respectively, and to be coupled to one another to clamp a pair of facing end transverse wires (5) of the tray sections (1, 2),
the clamp (10) being **characterized in that** the inner element (11) comprises a first portion and a second portion (13, 14) substantially perpendicular to one another, the first portion (13) being intended to be coupled with the outer element (12) to clamp respective parts (6, 7) of the end transverse wires (5) of the two tray sections (1, 2), and the second portion (14) being intended to house the parts (7, 6) of the transverse wires (5) which are not clamped between the first portion (13) and the outer element (12).

2. A clamp according to Claim 1, **characterized in that** the second portion (14) of the inner element (11) forms a pair of seats (14b, 18) for the parts (7, 6) of the transverse wires (5) which are not clamped, whereby these parts (7, 6) are prevented from relative pivoting in a longitudinal plane.

3. A clamp according to Claim 2, **characterized in that** the second portion (14) of the inner element (11) comprises:
a substantially rectangular base plate (14a) for providing a transverse restraining surface for the parts (7, 6) which are not clamped,
a first pair of transverse walls (14b) projecting outwardly from the longitudinally opposite edges of the base plate (14a) for providing first longitudinal restraining surfaces for the said parts (7, 6), and
a second pair of transverse walls (18) projecting outwardly from the base plate (14a) between the first pair of transverse walls (14b) for providing second longitudinal restraining surfaces for the said parts (7, 6).

4. A clamp according to Claim 3, **characterized in that** the first pair of transverse walls (14b) is formed by longitudinally opposite edge portions of the base plate (14a) which are bent at right angles.

5. A clamp according to Claim 3, **characterized in that** the second pair of transverse walls comprises a pair of tabs (18) which are integral with the base plate (14a) and which can be formed by cutting and subsequent bending of a pair of offset rectangular portions of the plate (14a).

6. A clamp according to Claim 3, **characterized in that** the second pair of transverse walls is formed by a tab (18) projecting outwardly from the upper edge of the base plate (14a).

7. A clamp according to any one of the preceding claims, **characterized in that** the first portion (13) of the inner element (11) and the outer element (12) are arranged to be coupled to one another by means of screw fasteners (16, 20).
